(19) Europäisches Patentamt
European Patent Office
Office européen des brevets

(11) **EP 4 085 233 B1**

(12) **EUROPÄISCHE PATENTSCHRIFT**

(45) Veröffentlichungstag und Bekanntmachung des Hinweises auf die Patenterteilung:
**26.06.2024 Patentblatt 2024/26**

(21) Anmeldenummer: **20835734.3**

(22) Anmeldetag: **16.12.2020**

(51) Internationale Patentklassifikation (IPC):
**G01D 5/20** *(2006.01)* **G01D 11/02** *(2006.01)*

(52) Gemeinsame Patentklassifikation (CPC):
**G01D 11/02; F16C 19/381; F16C 41/007; F16C 43/04; G01D 5/202;** F16C 2233/00; F16C 2360/31; G01P 3/443

(86) Internationale Anmeldenummer:
**PCT/EP2020/086344**

(87) Internationale Veröffentlichungsnummer:
**WO 2021/136659 (08.07.2021 Gazette 2021/27)**

(54) **WÄLZLAGER MIT POSITIONSBESTIMMUNGSEINRICHTUNG**

ROLLING BEARING HAVING POSITION-DETERMINING DEVICE

PALIER À ROULEMENT AVEC DISPOSITIF DE DÉTERMINATION DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.01.2020 DE 102020200032**

(43) Veröffentlichungstag der Anmeldung:
**09.11.2022 Patentblatt 2022/45**

(73) Patentinhaber:
• **thyssenkrupp rothe erde Germany GmbH 44137 Dortmund (DE)**
• **thyssenkrupp AG 45143 Essen (DE)**

(72) Erfinder:
• **ELFERT, Gunther 59597 Erwitte (DE)**
• **STAKEMEIER, Bernd 59597 Erwitte (DE)**

(74) Vertreter: **thyssenkrupp Intellectual Property GmbH ThyssenKrupp Allee 1 45143 Essen (DE)**

(56) Entgegenhaltungen:
**EP-A1- 1 447 579 DE-A1-102004 050 999 JP-A- 2006 029 517**

**Beschreibung**

**Stand der Technik**

Die Erfindung betrifft ein Wälzlager mit einer Positionsbestimmungseinrichtung nach dem Oberbegriff des Anspruchs 1.

In verschiedenen Anwendungsgebieten von Wälzlagern ist es wünschenswert, eine durch das Wälzlager eingestellte Winkelposition mittels einer Positionsbestimmungseinrichtung überwachen zu können, um dadurch beispielsweise eine Positionsverstellung regeln zu können. Ein beispielhafter Anwendungsfall ist die Positionsbestimmung eines gegenüber dem Fahrwerk drehbaren Baggeraufbaus. Weitere Anwendungsbeispiele können Krananlagen oder Blattlager von Windenergieanlagen sein.

Eine gängige Form der Positionsbestimmung sind Inkrementalgeber, die entweder direkt an einem Antriebsmotor zur Verstellung des Wälzlagers angeflanscht oder extern über ein Mitnehmerritzel angetrieben werden. Im Inneren der Geber befindet sich eine Strichscheibe als Maßverkörperung, die üblicherweise optisch abgetastet wird. Typische Auflösungen sind z.B. 200-400 Striche pro Umdrehung. Ferner sind Impulszähler bekannt, die auf einer digitalen Abtastung von Impulsmarken mit induktiven Näherungsschaltern basieren.

Neben diesen antriebsseitig, außerhalb eines Wälzlagers vorgesehenen Positionsbestimmungseinrichtungen ist beispielsweise aus EP 1 526 362 B1 ein Wälzlager bekannt, das einen eingebauten Absolutwertgeber enthält. Bei Absolutwertgebern, die eine beispielsweise sinusförmig verlaufende magnetische Charakteristik abtasten, besteht ein Zielkonflikt zwischen der erreichbaren Messgenauigkeit und der Größe des abdeckbaren Messbereichs. Um diesen Zielkonflikt zu lösen, wird in EP 1 526 362 B1 eine steiler als sinusförmig verlaufende magnetische Charakteristik an einem Wälzlagerring mit mindestens zwei an dem anderen Wälzlagerring in Umfangsrichtung versetzt angeordneten Magnetsensoren abgetastet. Nachteilig an dieser Positionsbestimmungseinrichtung ist, dass die zur Positionsbestimmung abgetasteten Messdaten unter dem Einfluss externer Magnetfelder, oder auch durch mit der Alterung eintretender Entmagnetisierung der Charakteristik verfälscht werden und damit ungenaue und unzuverlässige Positionswerte bereitgestellt werden.

Aus EP 1 447 579 A1 ist ein Wälzlager nach dem Oberbegriff des Anspruchs 1 bekannt. EP 1 447 579 A1 zeigt und beschreibt zu den Figuren 24 bis 28 ein Kugellager mit einer Rotationsbestimmungseinrichtung. Ein Sensor ist dabei einer Encoderscheibe axial gegenüberliegend angeordnet. Die Encoderscheibe ist ringförmig mit konstanter radialer Breite ausgebildet und weist eine Vielzahl von Messflächen auf, die in ihrer axialen Höhe stufenförmig voneinander abgegrenzt sind und jeweils einen festen Zentrumswinkel einnehmen. Entsprechend ändert sich der Abstand zwischen der Encoderscheibe und dem Sensor stufenweise mit der Drehung des Lagers. Durch Auslesen der Sensordaten kann auf die absolute Winkelposition zurückgeschlossen werden, wobei als Sensor ein Wirbelstromsensor verwendet werden kann.

Aufgabe der Erfindung ist es daher, ein Wälzlager mit einer Positionsbestimmungseinrichtung anzugeben, bei dem auch in rauen Umgebungsbedingungen eine zuverlässige und genaue Bestimmung des Absolutdrehwinkels des Wälzlagers möglich ist.

Diese Aufgabe wird gelöst durch ein Wälzlager mit den Merkmalen des Anspruchs 1.

Hierdurch wird ein Wälzlager mit mindestens zwei zueinander verdrehbar angeordneten Lagerringen, mindestens einer Reihe von zwischen den Lagerringen abrollbar angeordneten Wälzkörpern und mit einer Positionsbestimmungseinrichtung zur Bestimmung einer absoluten Winkelposition der Lagerringe zueinander geschaffen. Die Positionsbestimmungseinrichtung umfasst auf einer Oberfläche eines ersten der Lagerringe über dessen Umfang verteilt angeordnete Feldmuster, deren Felder wertdiskrete Feldhöhen aufweisen. Die Positionsbestimmungseinrichtung umfasst ferner mindestens einen an einem zweiten der Lagerringe zur Abtastung der Feldmuster angeordneten Wirbelstromsensor und eine Auswerteeinrichtung. Die Auswerteeinrichtung ist dazu ausgebildet, der Abtastung jeweils eines der Feldmuster ein zugehöriges Winkelpositionssignal zuzuordnen, das die absolute Winkelposition der Lagerringe zueinander beschreibt.

Die erfindungsgemäße Positionsbestimmungseinrichtung ist in das Wälzlager integriert. Die Positionsbestimmungseinrichtung ist somit insbesondere in rauen Umgebungsbedingungen mechanisch durch das Material der Wälzlagerringe geschützt. Die Wälzlagerringe sind beispielsweise aus einem Wälzlagerstahl hergestellt. Durch die Abtastung von Feldmustern mittels Wirbelstromsensoren beruht die Positionsbestimmungseinrichtung ferner auf einem Messprinzip, das unempfindlich ist gegenüber einer Fett- oder Ölschmierung, wie sie im Innenraum des Wälzlagers Verwendung finden kann. Durch die Verwendung von Feldmustern mit wertdiskreten Feldhöhen werden in Abhängigkeit von der jeweils abgetasteten Feldhöhe diskret unterschiedliche Messsignale erzeugt, die eine eindeutige Zuordnung des zugehörigen Winkelpositionssignals erlauben. Das erfindungsgemäße Positionsbestimmungssystem ist dadurch unempfindlich gegenüber äußeren Störeinflüssen und Alterungserscheinungen.

Durch die eindeutige Zuordnung eines zugehörigen Winkelpositionssignals zu jedem der Feldmuster ist die absolute Winkelposition der Wälzlagerringe zueinander nach dem Abtasten nur eines Feldmusters bekannt. Das verwendete Messprinzip erlaubt zudem eine schnelle und zuverlässige Abtastung der Feldmuster, so dass die aktuelle Winkelposition auch während Verdrehgeschwindigkeiten von mehr als 10/min unabhängig von der Drehrichtung kontinuierlich bestimmbar ist.

Ein Feldmuster im Sinne der Erfindung ist eine festgelegte Anordnung einer vorgegebenen Anzahl von Feldern. Durch die gleiche Anordnung der Felder in jedem Feldmuster sind die Positionen der Felder relativ zueinander im Feldmuster festgelegt.

Die Feldmuster unterscheiden sich durch die für jedes einzelne Feld vorgesehene Feldhöhe. Die Feldhöhe an jeder der Feldpositionen kann eine vorgegebene Anzahl diskret unterschiedlicher Werte annehmen. Die diskrete Wertemenge für die Feldhöhe kann positive Werte und/oder negative Werte umfassen. Eine Feldhöhe von null ist ausdrücklich von der Erfindung mitumfasst. Im Falle von positiven Werten der Feldhöhe sind die Felder als Erhebungen und im Falle von negativen Werten als Vertiefungen in der Oberfläche ausgebildet. Bei einer Feldhöhe von null liegt das Feld auf der Höhe der Oberfläche.

Erfindungsgemäß umfassen die Feldhöhen der Felder Vertiefungen und/oder Erhebungen in der Oberfläche. Bevorzugt sind sämtliche Felder aller Feldmuster entweder als Vertiefungen oder aber als Erhebungen in der Oberfläche, besonders bevorzugt jeweils einschließlich einer Feldhöhe von null ausgebildet. Denkbar sind aber auch Ausführungsformen, in denen Erhebungen und Vertiefungen in der Oberfläche in den Feldmustern kombiniert auftreten.

Vorzugsweise enthält jedes Feldmuster an einer vorgegebenen Position des Feldmusters ein Indexfeld, dessen Feldhöhe sich von der umgebenden Oberfläche unterscheidet. Durch die Mindestabweichung der Feldhöhe der Indexfelder von der umgebenden Oberfläche können auch solche Feldmuster zuverlässig erkannt werden, deren weitere Felder zumindest teilweise eine Feldhöhe von null aufweisen.

Besonders bevorzugt sind die Indexfelder auf einem axial und/oder radial von den übrigen Feldern des Feldmusters separierten Indexkreis angeordnet, und einer der Wirbelstromsensoren ist den Indexfeldern zugeordnet, derart, dass dieser beim Umlauf der Wälzlagerringe nur die Indexfelder überstreicht. In diesem Fall genügt die Auswertung der Messsignale eines den Indexfeldern zugeordneten Wirbelstromsensors, um zu erkennen, dass eine Winkelposition vorliegt, in der ein Feldmuster abgetastet werden kann. Vorzugsweise ist die Auswerteeinrichtung daher dazu ausgebildet, basierend auf der Auswertung von Messsignalen des den Indexfeldern zugeordneten Wirbelstromsensors einen Auswertezeitpunkt für ein Messsignal von mindestens einem weiteren Wirbelstromsensor festzulegen. Auf diese Weise wird vorteilhaft erreicht, dass der Rechenaufwand der Auswerteeinheit reduziert ist, da nur ein Messsignal kontinuierlich auszuwerten ist.

Vorzugsweise sind die Feldhöhen der Feldmuster aus einer Wertemenge gewählt, die mindestens drei diskrete Werte umfasst. Dies hat den Vorteil, dass gegenüber einem ebenfalls funktionsfähigen binären System eine größere Anzahl unterschiedlicher Winkelpositionswerte bei vorgegebener Feldanzahl pro Feldmuster codiert werden kann. Eine vorgegebene Genauigkeit der Positionsbestimmung ist daher mit einem geringeren Platzbedarf im Wälzlager erreichbar. Die Anzahl diskreter Feldhöhenwerte ist nach oben durch das Auflösungsvermögen der verwendeten Wirbelstromsensoren begrenzt. In besonders bevorzugten Ausführungsformen sind die Feldhöhen der Feldmuster daher aus einer Wertemenge gewählt, die 3 bis 8 verschiedene diskrete Werte enthält.

Die Feldmuster umfassen vorzugsweise eine vorgegebene Anzahl an Feldern, denen jeweils genau ein Wirbelstromsensor zur Abtastung zugeordnet ist. Vorzugsweise umfasst jedes Feldmuster eine festgelegte Feldanzahl im Bereich von 2 bis 5 Feldern. Durch die 1:1 Zuordnung von Wirbelstromsensoren zu Feldern in den Feldmustern wird erreicht, dass das gesamte Feldmuster zeitgleich abgetastet werden kann. Es muss somit nicht ein Überstreichen mehrerer Felder durch einen Wirbelstromsensor abgewartet werden, bevor ein Winkelpositionssignal ausgegeben werden kann. Es wird dadurch eine schnelle und gegenüber Drehrichtungswechseln unempfindliche Messmethode realisiert.

Bevorzugt weisen die Felder der Feldmuster Feldflächen auf, die größer sind als eine aktive Sensorfläche des mindestens einen Wirbelstromsensors. Beim Überstreichen der Felder mit der aktiven Sensorfläche wird dann ein Messwert-Plateau erreicht, solange die aktive Sensorfläche vollständig innerhalb der Feldfläche liegt. Die Auswerteeinrichtung kann anhand eines erreichten Messwert-Plateaus die Felder eindeutig erkennen. Die Erkennung der Felder kann somit unabhängig vom absoluten Wert der vorliegenden Messwerte erfolgen. Denkbar sind aber auch Ausführungsformen, bei denen die Feldflächen kleiner oder gleich der aktiven Sensorfläche der Wirbelstromsensoren sind. In diesem Fall können die Feldpositionen über eine Extremwerterkennung festgestellt werden.

In vorteilhaften Ausführungsformen kann ferner vorgesehen sein, dass die Auswerteeinrichtung dazu ausgebildet ist, außerhalb von Feldmustern aufgenommene Messwerte des mindestens einen Wirbelstromsensors bei der Bestimmung des Winkelpositionssignals zu verwenden, um lastabhängige Verformungen der Lagerringe zu kompensieren. Die Auswerteeinrichtung kann außerhalb von Feldmustern aufgenommene Messwerte anhand eines Messwert-Plateaus erkennen, das einem Mindestabstand zum Wirbelstromsensor entspricht. Dieser Mindestabstand schwankt in Abhängigkeit von lastabhängigen Verformungen der Lagerringe in gleichem Maße, wie die erfassten Feldhöhen. Die außerhalb von Feldmustern aufgenommenen Messwerte können somit von der Auswerteeinrichtung als Offset verwendet werden, um die bei der Abtastung der Feldmuster aufgenommenen Messwerte lastabhängig zu korrigieren.

Sofern die Felder als Vertiefungen ausgebildet sind können diese beispielsweise als gebohrte Sacklöcher mit unterschiedlichen Feldhöhen unmittelbar in den Lagerring eingebracht sein. Es kann aber auch vorgesehen sein, dass die Feldmuster durch mindestens ein an dem ersten Lagerring fixiertes gelochtes Blech ausgebildet sind. Durch das Übereinanderlegen mehrerer gelochter Bleche können auch Feldmuster mit mehr als zwei unterschiedlichen Tiefen mittels gelochter Bleche realisiert werden. Erhebungen können beispielsweise durch das Aufbringen von Blechen mit festgelegter Stärke, vorzugsweise Abstimmbeilagen, ausgebildet sein.

Weitere vorteilhafte Ausführungsformen sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

## Kurzbeschreibung der Zeichnungen

Fig. 1     zeigt schematisch in einer perspektivischen Ansicht ein erstes Ausführungsbeispiel des erfindungsgemäßen Wälzlagers,

Fig. 2     zeigt schematisch einen Lagerring eines zweiten Ausführungsbeispiels der Erfindung, und

Fig. 3     zeigt schematisch die Abtastung eines Feldes durch einen Wirbelstromsensor.

## Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

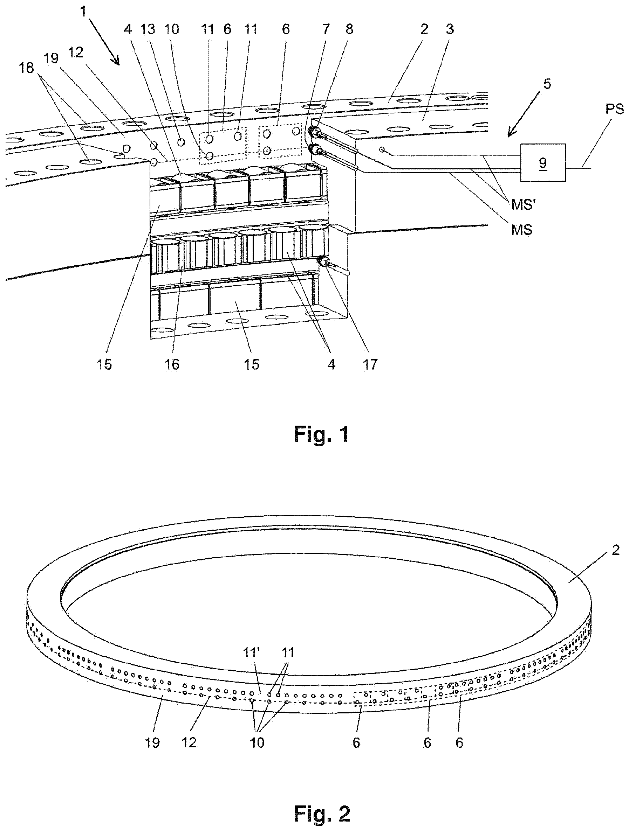

**Fig. 1** zeigt ein erfindungsgemäßes Wälzlager 1 in einer perspektivischen Darstellung, in der allein zur Verdeutlichung der Erfindung ein Abschnitt eines der Lagerringe ausgeschnitten ist, um das Innere des Lagers sichtbar zu machen.

Das Wälzlager 1 weist zwei zueinander verdrehbar angeordnete Lagerringe 2, 3 auf, sowie mindestens eine Reihe von zwischen den Lagerringen 2, 3 abrollbar angeordneten Wälzkörpern 4 und eine Positionsbestimmungseinrichtung 5 zur Bestimmung einer absoluten Winkelposition der Lagerringe 2, 3 zueinander.

Beispielhaft ist eine sogenannte dreireihige Rollendrehverbindung dargestellt, die drei Reihen von Wälzkörpern 4 - eine Trag-, Radial- und Halterollenreihe - aufweist. Die Wälzkörper 4 können durch Fensterstücke 15 bzw. Rollenzwischenstücke 16 voneinander getrennt sein. Alternativ können auch Käfige zu diesem Zweck verwendet werden. Das gezeigte Wälzlager 1 umfasst ferner Befestigungsbohrungen 18 an beiden Lagerringen 2, 3 zur Befestigung des Lagers 1 an den Anschlusskonstruktionen der jeweils zu lagernden Bauteile. Neben der Positionsbestimmungseinrichtung 5 kann das Lager weitere Sensoren 17 enthalten, beispielsweise zur Verschleiß- oder Belastungsmessung.

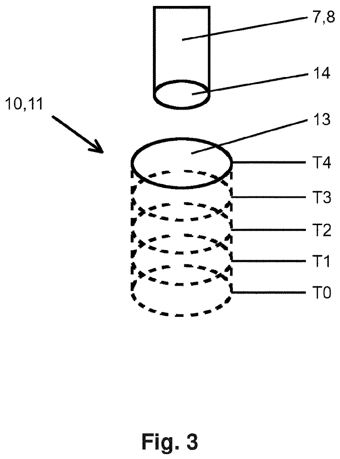

Die Positionsbestimmungseinrichtung 5 umfasst auf einer Oberfläche 19 eines ersten Lagerrings 2 der Lagerringe 2, 3 über dessen Umfang verteilt angeordnete Feldmuster 6 mit wertdiskreten Feldhöhen T0, T1, T2, T3, T4 (vgl. Fig. 3), mindestens einen an dem zweiten Lagerring 3 zur Abtastung der Feldmuster 6 angeordneten Wirbelstromsensor 7, 8 und eine Auswerteeinrichtung 9. Die Auswerteeinrichtung 9 ist dazu ausgebildet, der Abtastung jeweils eines der Feldmuster 6 ein zugehöriges Winkelpositionssignal PS zuzuordnen, das die absolute Winkelposition der Lagerringe 2, 3 zueinander beschreibt.

Das Winkelpositionssignal PS kann wie in Fig. 1 gezeigt von der Auswerteeinrichtung 9 ausgegeben werden. Denkbar sind aber auch Ausführungsformen bei denen die Auswerteeinrichtung 9 die Winkelpositionssignale zwischenspeichert und beispielsweise durch Differenzbildung jeweils ein relatives Positionssignal bestimmt und ausgibt, das die relative Drehung des Lagers im Verhältnis zu einer früheren Position des Lagers beschreibt.

In dem gezeigten Ausführungsbeispiel umfassen die Feldmuster 6 eine vorgegebene Anzahl von beispielsweise drei Feldern, denen jeweils genau ein Wirbelstromsensor 7, 8 zur Abtastung zugeordnet ist. Die Felder 10, 11 der Feldmuster 6 sind als Vertiefungen in der Oberfläche 19 ausgebildet, wobei eine Feldhöhe von null eingeschlossen ist. Die Vertiefungen können beispielsweise als gebohrte Löcher ausgebildet sein. Andere Formen, wie beispielsweise Nuten, Schlitze oder ovale Löcher sind aber ebenfalls denkbar. Gleiches gilt für die Formen möglicher Erhebungen.

Jedes Feldmuster 6 enthält an einer vorgegebenen Position des Feldmusters 6 ein sogenanntes Indexfeld 10, dessen Feldhöhe immer verschieden von null ist. Die Indexfelder 10 sind auf einem axial von den übrigen Feldern 11 des Feldmusters 6 separierten Indexkreis 12 angeordnet. Der den Indexfeldern 10 zugeordnete Wirbelstromsensor 7 überstreicht daher beim Umlauf der Wälzlagerringe 2, 3 nur die Indexfelder 10.

In alternativen Wälzlagerbauformen ist auch denkbar, dass die Positionsmesseinrichtung in axial einander gegenüberliegenden Flächen von zwei Wälzlagerringern verwirklicht ist. In diesem Fall kann der Indexkreis radial separiert von den übrigen Feldern der Feldmuster angeordnet sein.

Die Auswerteeinrichtung 9 ist dazu ausgebildet, basierend auf der Auswertung von Messsignalen MS des den Indexfeldern 10 zugeordneten Wirbelstromsensors 7 einen Auswertezeitpunkt für ein Messsignal MS' von mindestens einem weiteren Wirbelstromsensor 8 festzulegen. Zu diesem Zweck können die Messsignale MS des Wirbelstromsensors 7 kontinuierlich mit einer Messfrequenz von beispielsweise 200 MHz abgetastet werden. Denkbar ist aber auch, dass alle Wirbelstromsensoren 7, 8 kontinuierlich, vorzugsweise mit der gleichen Messfrequenz betrieben werden.

Während des Umlaufs der Wälzlagerringe 2, 3 zueinander tastet der Wirbelstromsensor 7 die Indexfelder 10 ab. Dabei schwankt das Messsignal MS zwischen einem Plateau-Messwert außerhalb der Indexfelder 10 und verschiedenen weiteren Plateau-Messwerten, die aufgenommen werden, während die aktive Fläche 14 des Sensors 7 vollständig in der Feldfläche 13 des jeweiligen Indexfeldes 10 liegt. Die weiteren Plateau-Messwerte unterscheiden sich für unterschiedliche Feldhöhen T0 bis T4.

Die Auswerteeinrichtung 9 kann dazu ausgebildet sein, außerhalb von Feldmustern 6 aufgenommene Messwerte des mindestens einen Wirbelstromsensors 7, 8 bei der Bestimmung des Winkelpositionssignals PS zu verwenden, um lastabhängige Verformungen der Lagerringe 2, 3 zu kompensieren.

In **Fig. 2** ist ein Lagerring 2 eines zweiten Ausführungsbeispiels der Erfindung gezeigt. Im Unterschied zum ersten Ausführungsbeispiel sind die Feldmuster auf einem Außenumfang des Rings angeordnet. In der rechten Bildhälfte sind die einzelnen Feldmuster 6 durch fiktive gestrichelte Linien zur besseren Veranschaulichung voneinander abgegrenzt.

Wie im ersten Ausführungsbeispiel umfassen die Feldmuster jeweils 3 Felder. Die Felder sind beispielhaft in L-Form angeordnet mit einem Indexfeld 10 in einer unteren Feldzeile und zwei weiteren Feldern 11 in einer oberen Feldzeile. Die Indexfelder 10 sind somit axial separiert von den weiteren Feldern 11 auf einem Indexkreis 12 angeordnet. Die weiteren Felder 11 sind ebenfalls auf einem Kreis angeordnet, der als Codierkreis bezeichnet werden kann. Die Indexfelder 10 weisen jeweils eine Feldhöhe verschieden von null auf, während die weiteren Felder 11 auch eine Feldhöhe von null aufweisen können.

Das in Fig. 2 gezeigte Beispiel basiert auf vier diskret unterschiedlichen Feldhöhen T0, T1, T2, T3 für die Indexfelder 10 und fünf diskret unterschiedlichen Feldhöhen T0, T1, T2, T3, T4 für die weiteren Felder 11 (vgl. Fig. 3). Dadurch ergeben sich $100 = 5^2 \times 4$ verschiedene Codiermöglichkeiten, so dass die Positionsmesseinrichtung eine Auflösung von 3,6° erreicht. Über die Codierung der Felder kann direkt ein Winkelpositionssignal zugeordnet werden, das die absolute Winkelposition der Lagerringe 2, 3 zueinander beschreibt. Dies kann beispielsweise nach Art eines Stellenwertsystems erfolgen:

$$\text{Winkel} = \text{Inkrement} \times (25 \times L1 + 5 \times L2 + L3),$$

wobei L1, L2 und L3 für normierte Werte der Feldhöhen T0 bis T4 der drei Felder des Feldmusters stehen, die ganzzahlige Werte von 0 (größte Tiefe T0) bis 4 (verschwindende Feldhöhe T4) annehmen können, die jeweils einer physikalischen Feldhöhe T0 bis T4 zugeordnet sind. Die physikalischen (nicht normierten) Feldhöhen T0 bis T4 können sich beispielsweise gleichmäßig gestuft in 0,2 mm bis 1 mm Schritten voneinander unterscheiden.

Durch zyklisch sich wiederholende Wahl der normierten Feldhöhe L3= 0, 1, 2, 3, 4, 0, 1,... des zweiten Felds 11 der oberen Zeile ergeben sich die dargestellten 5er-Gruppierungen, da alle fünf Feldmuster ein Feldmuster mit verschwindender Feldhöhe T4 (L3=4) auftritt.

In **Fig. 3** ist schematisch ein Wirbelstromsensor 7, 8 bei der Abtastung eines Felds 10, 11 eines Feldmusters gezeigt. Wie dargestellt weisen vorzugsweise die Felder 10, 11 der Feldmuster Feldflächen 13 auf, die größer sind als eine aktive Sensorfläche 14 des mindestens einen Wirbelstromsensors 7, 8, so dass sich die aktive Sensorfläche 14 während der Drehung zumindest zeitweise vollständig im Bereich des Felds 10, 11 befindet. Beispielsweise kann der Wirbelstromsensor 7, 8 bei einem Felddurchmesser von ca. 10 mm eine aktive Fläche 14 mit einem Durchmesser von ca. 8 mm haben.

Gemäß einem nicht dargestellten Ausführungsbeispiel können die Feldmuster 6 durch mindestens ein an dem ersten Lagerring 2 fixiertes Blech ausgebildet sein. Im Übrigen gelten die Ausführungen zu den vorhergehenden Ausführungsbeispielen entsprechend.

**Bezugszeichenliste**

| | |
|---|---|
| 1 | Wälzlager |
| 2 | erster Lagerring |
| 3 | zweiter Lagerring |
| 4 | Wälzkörper |
| 5 | Positionsbestimmungseinrichtung |

EP 4 085 233 B1

6 Feldmuster
7 Wirbelstromsensor für Indexfelder
8 Wirbelstromsensor
9 Auswerteeinrichtung
10 Indexfeld
11 Feld
12 Indexkreis
13 Feldfläche
14 aktive Sensorfläche
15 Fensterstück
16 Rollenzwischenstück
17 Sensor
18 Befestigungsbohrung
19 Oberfläche

T0 bis T4   Feldhöhe
MS, MS'    Messsignal
PS            Winkelpositionssignal

**Patentansprüche**

1. Wälzlager mit mindestens zwei zueinander verdrehbar angeordneten Lagerringen (2, 3), mindestens einer Reihe von zwischen den Lagerringen (2, 3) abrollbar angeordneten Wälzkörpern (4) und mit einer Positionsbestimmungseinrichtung (5) zur Bestimmung einer absoluten Winkelposition der Lagerringe (2, 3) zueinander, wobei die Positionsbestimmungseinrichtung (5) mindestens einen an einem zweiten (3) der Lagerringe (2, 3) zur Abtastung der Feldmuster (6) angeordneten Wirbelstromsensor (7, 8) und eine Auswerteeinrichtung (9) umfasst, **dadurch gekennzeichnet, dass** die Positionsbestimmungseinrichtung (5) auf einer Oberfläche (19) eines ersten (2) der Lagerringe (2, 3) über dessen Umfang verteilt angeordnete Feldmuster (6) umfasst, wobei jedes Feldmuster (6) eine festgelegte Anordnung einer vorgegebenen Anzahl von Feldern (10, 11) ist, durch die die Positionen der Felder (10, 11) relativ zueinander im Feldmuster (6) festgelegt sind, wobei die Felder (10, 11) der Feldmuster (6) wertdiskrete Feldhöhen (T0, T1, T2, T3, T4) aufweisen, die Vertiefungen und/oder Erhebungen in der Oberfläche umfassen, wobei sich die Feldmuster (6) durch die für jedes einzelne Feld (10, 11) vorgesehene Feldhöhe (T0, T1, T2, T3, T4) unterscheiden, und die Auswerteeinrichtung (9) dazu ausgebildet ist, der Abtastung jeweils eines der Feldmuster (6) ein zugehöriges Winkelpositionssignal (PS) zuzuordnen, das die absolute Winkelposition des ersten und des zweiten Lagerrings (2, 3) zueinander beschreibt.

2. Wälzlager nach Anspruch 1, **dadurch gekennzeichnet, dass** jedes Feldmuster (6) an einer vorgegebenen Position des Feldmusters (6) ein Indexfeld (10) enthält, dessen Feldhöhe (L1) sich von der umgebenden Oberfläche (19) unterscheidet.

3. Wälzlager nach Anspruch 2, **dadurch gekennzeichnet, dass** die Indexfelder (10) auf einem axial und/oder radial von den übrigen Feldern (11) des Feldmusters (6) separierten Indexkreis (12) angeordnet sind, und einer (7) der Wirbelstromsensoren (7, 8) den Indexfeldern (10) zugeordnet ist und beim Umlauf der Wälzlagerringe (2, 3) nur die Indexfelder (10) überstreicht.

4. Wälzlager nach Anspruch 3, **dadurch gekennzeichnet, dass** die Auswerteeinrichtung (9) dazu ausgebildet ist, basierend auf der Auswertung von Messsignalen (MS) des den Indexfeldern (10) zugeordneten Wirbelstromsensors (7) einen Auswertezeitpunkt für ein Messsignal (MS') von mindestens einem weiteren Wirbelstromsensor (8) festzulegen.

5. Wälzlager nach einem der Ansprüche 1 bis 4, **dadurch gekennzeichnet, dass** die Feldhöhen (T0, T1, T2, T3, T4) der Feldmuster (6) aus einer Wertemenge umfassend mindestens drei diskrete Werte gewählt sind.

6. Wälzlager nach einem der Ansprüche 1 bis 5, **dadurch gekennzeichnet, dass** die Feldmuster (6) eine vorgegebene Anzahl an Feldern umfassen, denen jeweils genau ein Wirbelstromsensor (7, 8) zur Abtastung zugeordnet ist.

7. Wälzlager nach einem der Ansprüche 1 bis 6, **dadurch gekennzeichnet, dass** die Felder (10, 11) der Feldmuster (6) Feldflächen (13) aufweisen, die größer sind als eine aktive Sensorfläche (14) des mindestens einen Wirbelstromsensors (7, 8).

8. Wälzlager nach einem der Ansprüche 1 bis 7, **dadurch gekennzeichnet, dass** die Auswerteeinrichtung (9) dazu ausgebildet ist, außerhalb von Feldmustern (6) aufgenommene Messwerte des mindestens einen Wirbelstromsensors (7, 8) bei der Bestimmung des Winkelpositionssignals (PS) zu verwenden, um lastabhängige Verformungen der Lagerringe (2, 3) zu kompensieren.

9. Wälzlager nach einem der Ansprüche 1 bis 8, **dadurch gekennzeichnet, dass** die Feldmuster (6) durch mindestens ein an dem ersten Lagerring (2) fixiertes Blech ausgebildet sind.


**Claims**

1. Rolling bearing having at least two bearing rings (2, 3) arranged rotatably relative to one another, at least one row of rolling elements (4) arranged rollably between the bearing rings (2, 3) and having a position-determining device (5) for determining an absolute angular position of the bearing rings (2, 3) relative to one another, the position-determining device (5) comprising at least one eddy current sensor (7, 8) arranged on a second (3) of the bearing rings (2, 3) for scanning the field patterns (6) and an evaluation device (9), **characterized in that** the position-determining device (5) comprises field patterns (6) arranged on a surface (19) of a first (2) of the bearing rings (2, 3) and distributed over the circumference thereof, wherein each field pattern (6) is a fixed arrangement of a predetermined number of fields (10, 11), by which arrangement the positions of the fields (10, 11) relative to one another in the field pattern (6) are fixed, wherein the fields (10, 11) of the field patterns (6) have discrete-value field heights (T0, T1, T2, T3, T4), which comprise depressions and/or elevations in the surface, wherein the field patterns (6) differ by the field height (T0, T1, T2, T3, T4) provided for each individual field (10, 11), and the evaluation device (9) is designed to assign an associated angular position signal (PS), which describes the absolute angular position of the first and second bearing rings (2, 3) relative to one another, to the scanning of each of the field patterns (6).

2. Rolling bearing according to claim 1, **characterized in that** each field pattern (6) contains an index field (10) at a predetermined position of the field pattern (6), the field height (L1) of which differs from the surrounding surface (19).

3. Rolling bearing according to claim 2, **characterized in that** the index fields (10) are arranged on an index circle (12) which is axially and/or radially separated from the other fields (11) of the field pattern (6), and one (7) of the eddy current sensors (7, 8) is assigned to the index fields (10) and only sweeps over the index fields (10) when the rolling bearing rings (2, 3) rotate.

4. Rolling bearing according to claim 3, **characterized in that** the evaluation device (9) is designed to determine an evaluation time for a measurement signal (MS') from at least one further eddy current sensor (8) based on the evaluation of measurement signals (MS) from the eddy current sensor (7) assigned to the index fields (10).

5. Rolling bearing according to any one of claims 1 to 4, **characterized in that** the field heights (T0, T1, T2, T3, T4) of the field patterns (6) are selected from a set of values comprising at least three discrete values.

6. Rolling bearing according to any one of claims 1 to 5, **characterized in that** the field patterns (6) comprise a predetermined number of fields, to each of which exactly one eddy current sensor (7, 8) is assigned for scanning.

7. Rolling bearing according to any one of claims 1 to 6, **characterized in that** the fields (10, 11) of the field patterns (6) have field areas (13) which are larger than an active sensor area (14) of the at least one eddy current sensor (7, 8).

8. Rolling bearing according to any one of claims 1 to 7, **characterized in that** the evaluation device (9) is designed to use measured values of the at least one eddy current sensor (7, 8) recorded outside of field patterns (6) when determining the angular position signal (PS) in order to compensate for load-dependent deformations of the bearing rings (2, 3).

9. Rolling bearing according to any one of claims 1 to 8, **characterized in that** the field patterns (6) are formed by at least one sheet metal fixed to the first bearing ring (2).

**Revendications**

1. Palier à roulement comprenant au moins deux bagues de roulement (2, 3) disposées de manière rotative l'une par rapport à l'autre, au moins une rangée d'éléments de roulement (4) disposés de manière roulante entre les bagues de roulement (2, 3) et comprenant un dispositif de détermination de la position (5) pour déterminer une position angulaire absolue des bagues de roulement (2, 3) l'une par rapport à l'autre, le dispositif de détermination de la position (5) comprend au moins un capteur à courants de Foucault (7, 8) disposé sur un deuxième (3) des anneaux de roulement (2, 3) pour balayer les motifs de champ (6) et un dispositif d'évaluation (9), **caractérisé en ce que** le dispositif de détermination de la position (5) comprend des motifs de champ (6) disposés sur une surface (19) d'un premier (2) des bagues de roulement (2, 3) et distribués sur la circonférence de ceux-ci, dans lequel chaque motif de champ (6) est un arrangement fixe d'un nombre prédéterminé de champs (10, 11), par lequel les positions des champs (10, 11) les uns par rapport aux autres dans le motif de champ (6) sont fixes, dans lequel les champs (10, 11) des motifs de champ (6) ont des hauteurs de champ à valeurs discrètes (T0, T1, T2, T3, T4), qui comprennent des dépressions et/ou des élévations dans la surface, les motifs de champ (6) diffèrent par la hauteur de champ (T0, T1, T2, T3, T4) prévue pour chaque champ individuel (10, 11), et le dispositif d'évaluation (9) est conçu pour attribuer un signal de position angulaire associé (PS), qui décrit la position angulaire absolue des premier et deuxième bagues de roulement (2, 3) l'un par rapport à l'autre, au balayage de chacun des motifs de champ (6).

2. Palier à roulement selon la revendication 1, **caractérisé en ce que** chaque motif de champ (6) contient un champ d'index (10) à une position prédéterminée du motif de champ (6), dont la hauteur de champ (L1) diffère de la surface environnante (19).

3. Palier à roulement selon la revendication 2, **caractérisé en ce que** les champs d'indexation (10) sont disposés sur un cercle d'indexation (12) qui est séparé axialement et/ou radialement des autres champs (11) du modèle de champ (6), et l'un (7) des capteurs de courants de Foucault (7, 8) est affecté aux champs d'indexation (10) et ne balaie les champs d'indexation (10) que lorsque les bagues de roulement (2, 3) tournent.

4. Palier à roulement selon la revendication 3, **caractérisé en ce que** le dispositif d'évaluation (9) est conçu pour déterminer un temps d'évaluation pour un signal de mesure (MS') provenant d'au moins un autre capteur à courants de Foucault (8) sur la base de l'évaluation des signaux de mesure (MS) provenant du capteur à courants de Foucault (7) assigné aux champs d'indexation (10).

5. Palier à roulement selon l'une des revendications 1 à 4, **caractérisé par le fait que** les hauteurs de champ (T0, T1, T2, T3, T4) des motifs de champ (6) sont sélectionnées dans un ensemble de valeurs comprenant au moins trois valeurs discrètes.

6. Palier à roulement selon l'une des revendications 1 à 5, **caractérisé par le fait que** les motifs de champ (6) comprennent un nombre prédéterminé de champs, à chacun desquels exactement un capteur de courants de Foucault (7, 8) est affecté pour le balayage.

7. Palier à roulement selon l'une des revendications 1 à 6, **caractérisé par le fait que** les champs (10, 11) des motifs de champ (6) ont des zones de champ (13) qui sont plus grandes qu'une zone de capteur active (14) du au moins un capteur à courants de Foucault (7, 8).

8. Palier à roulement selon l'une des revendications 1 à 7, **caractérisé par le fait que** le dispositif d'évaluation (9) est conçu pour utiliser les valeurs mesurées par au moins un capteur à courants de Foucault (7, 8) enregistrées en dehors des motifs de champ (6) lors de la détermination du signal de position angulaire (PS) afin de compenser les déformations des bagues de roulement (2, 3) en fonction de la charge.

9. Palier à roulement selon l'une quelconque des revendications 1 à 8, **caractérisé en ce que** les motifs de champ (6) sont formés par au moins une tôle fixée à la première bague de roulement (2).

**Fig. 1**

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1526362 B1

- EP 1447579 A1